# EUROPEAN PATENT APPLICATION

(11) **EP 0 683 599 A1**
(43) Date of publication of application: **22.11.1995**
(21) Application number: 95303022.8
(22) Date of filing: 03.05.1995
(51) Int. Cl.: H04N 1/41

(54) **Image processing apparatus and method**

(30) Priority: 16.05.1994 US 242795
(71) Applicant: International Business Machines Corporation, Armonk, N.Y. 10504 (US)
(72) Inventor: Kisor, Gregory Hurst, Boca Raton, Florida 33428 (US); Rao, Arun Mohan, Delray Beach, Florida 33445 (US); Bergman, John Harold, Boynton Beach, Florida 33462 (US); Moore, Victor Stuart, Boynton Beach, Florida 33436 (US); Kumar, Vijay Raj, Bedford, New York 10506 (US)
(74) Representative: Davies, Simon Robert

(57) **Abstract**

A dithered bilevel image file 68 is first compressed by analyzing blocks of pixels and counting the number of pixels that are turned on and represent a monochrome color (e.g., black). A compressed file 72 is created containing block pixel counts for all blocks in the dithered bilevel image file. Subsequently, the block pixel count file is decompressed 108 by using the block pixel counts for all of the blocks to randomly select predetermined block pixel patterns from a plurality of pixel pattern sets 110. Each pattern set includes a plurality of different block pixel patterns that present a range of different grey tone levels ranging from completely black to completely white. The pattern sets are used to create a transformed bit mapped image file 112 that can then be printed or displayed.

## Description

This invention relates to the field of image processing, and, more particularly, to improved apparatus and methods for processing dithered bilevel image files.

Dithering is a process for converting a grey scaled image into an image made up of black dots in a contrasting background such as the white color of paper. For example, black and white newspaper images or pictures are dithered. To the eye, such pictures look like photographs with full grey tones, but close examination reveals the pictures actually are composed of many tiny black dots on a white background. Dithering is necessary because a printer press cannot print individual dots with varying levels of intensity.

Dithered images can be created and processed as bits in a data processing system, and this gives rise to problems. One problem concerns the size of files. A dithered image is represented in a bit mapped image file containing one bit for each picture element or pixel. Images having a fine resolution produce large files that require large storage areas and take a relatively long time to transmit. It is desirable to compress such files to reduce storage requirements and transmission times. Another problem is that once an image is dithered it becomes difficult to compress because the image contains frequent black-to-white and white-to-black transitions and has large numbers of individual and randomly appearing black dots. These random black dots occur throughout the image to give it a smothered appearance.

Algorithms have been designed especially to compress bilevel images, including dithered bilevel images. The ISO/IEC International Standard 11544, also known as JBIG (Joint Bilevel Image Group) standard, uses complex coding methods that operate on all pixels in the image. The first step is that the method determines the probability of each pixel based on a neighborhood of pixels which is defined by a template passed across the page. This probability is then used to determine the exact coding of the image. Effectively, each pixel code is based on computations involving at least eight other pixels. Such a method is effective but requires considerable computation to code an entire image.

Accordingly, the invention provides a method of processing a dithered bilevel image to produce a compressed image, said dithered bilevel image comprising a plurality of pixels, each pixel having one bit to indicate whether the pixel has a first or second state, said method comprising the steps of:
selecting blocks of adjacent pixels;
counting, for each block, the number of pixels in the block having the first state; and
forming the compressed image by representing each block by its counted number of pixels.

In a dithered bilevel image, the structure on a pixel by pixel basis is not discernable. Rather the eye aggregates groups of adjacent pixels to give an impression of a particular grey tone (for a black and white image), dependent on the relative numbers of black and white pixels. Effectively therefore a dithered bilevel image trades reduced spatial resolution for enhanced greyscale resolution. The invention is based on the recognition that for such images, the detailed structure on a pixel by pixel basis is not important, only the perceived overall grey tone. There is therefore a redundancy in that many different pixel arrangements can produce the same overall grey tone, and this redundancy is exploited in the compression process. Note that there may be some further degradation in spatial resolution or image quality as a result of this (ie the compression is lossy), but providing an appropriate block size is used this can be kept within acceptable limits.

In a preferred embodiment, each block of adjacent pixels contains the same number of pixels and each pixel is in only one selected block. Thus whilst it might in theory be possible to use blocks of differing sizes, it is much simpler from a processing point of view if they all have the same size (except possibly around the edges). Similarly, whilst it may be possible to select overlapping blocks (although care would be needed for the decompression), this is more complicated and produces a lower degree of compression that having non-overlapping blocks where a pixel is in only one selected block.

It is particularly convenient for each block of adjacent pixels to comprise sixteen pixels in a four by four arrangement, and said counted number to comprise a four bit binary number. An array of sixteen pixels is a good compromise between a smaller array, which does not provide such good compression, and a larger array, which may lead to visible image degradation. It will be noted that in this case, there are actually 17 different counts, ie from 0 to 16 inclusive, of possible pixels in the first state, which is one more than can be accommodated in a four bit binary number. This is handled by representing 0-13 by a corresponding count of 0-13, both 14 and 15 by a count of 14, and 16 by a count of 15. Although this does cause some degradation to image quality, in general it is not significant. For example, if the first state is black, the difference between two shades of dark grey is rarely important. Thus it is possible to use an approximate count in the compressed image in order to save on bits in the count representation (thereby increasing the degree of compression).

In a preferred embodiment the method further comprises the step of performing an additional compression process on said compressed image, to produce a further compressed image. This can be effective since large areas of the approximately equal tone will be represented by a long sequence of equal (or similar) counts, and in general such long sequences of equal or similar numbers can be significantly compressed.

The invention further provides a method of processing an image compressed as above to form a decompressed image, said method comprising the steps of:
storing at least one pattern set, each pattern set comprising a plurality of different block pixel bit patterns; and
forming the decompressed image by representing each counted number in the compressed image by a corresponding block pixel bit pattern.

In a preferred embodiment, each block pixel bit pattern has the same size as the blocks of selected pixels, and the block pixel bit pattern corresponding to a counted number contains a number of pixels in said first state approximately equal to said counted number. It is also preferred that the distribution of pixels in said first state in each block pixel bit pattern is such as to be perceived as substantially uniform, so that the same overall grey-tone is perceived as for the corresponding original block.

One particular concern in the decompression process is that if the same block pixel bit pattern is used repeatedly, this may lead to patterns or artifacts appearing in the final image which were not present in the original. In order to avoid such problems, there are preferably a plurality of pattern sets, with the block pixel bit pattern corresponding to any given counted number in the compressed image being selected at random from between said plurality of pattern sets. It is particularly preferred if there are between three and eight pattern sets, the lower limit being the minimum number to avoid artifacts, the upper limit being the maximum number above which it is difficult to discern any visual improvement (ie any further reduction in artifacts).

The invention further provides apparatus for processing a dithered bilevel image to produce a compressed image, said dithered bilevel image comprising a plurality of pixels, each pixel having one bit to indicate whether the pixel has a first or second state, said apparatus comprising:
means for selecting blocks of adjacent pixels;
means for counting, for each block, the number of pixels in the block having the first state; and
means for forming the compressed image by representing each block by its counted number of pixels.

The invention further provides apparatus for processing an image compressed as above to form a decompressed image, said apparatus comprising:
means for storing at least one pattern set, each pattern set comprising a plurality of different block pixel bit patterns; and
means for forming the decompressed image by representing each counted number in the compressed image by a corresponding block pixel bit pattern.

The image compression and decompression described above finds utility in any device which supports dithered bi-level images, eg a FAX machine or computer, and may be implemented either by dedicated hardware logic circuitry, or in software. Generally such device will be able to both perform both compression of original images and decompression of compressed images (eg that have been retrieved from storage or transmitted from another location). Typically the decompressed image will then be printed or displayed as a monochromatic image, in which a foreground colour is assigned to one of said first and second pixel states, and a background colour is assigned to the other of said first and second pixel states. Normally the monochromatic image is greyscale, with the background colour being white for paper printing.

The above techniques compress and decompress dithered images, requiring much less computation than algorithms such as JBIG, and produce superior image quality and typically smaller files than JBIG. Because fax images are dithered, small files are particularly advantageous in applications such as sending fax mail over wireless networks.

Compressing the dithered bilevel file into a second file having substantially fewer bits than are contained in the dithered bilevel file reduces demands for storage capacity and transmission time for the file. In the decompression process a converted and compressed image file is processed to produce a resultant bit mapped image in which pixels are turned on in a pattern that differs from the pattern in the original dithered bilevel image but which presents substantially the same grey scale levels as in the original image.

Thus a dithered bilevel image may be processed by first converting an image into a block pixel count data file that specifies or lists the number of black pixels contained in blocks of pixels in the dithered bilevel image, and by then transforming the block pixel count data file into a bit mapped image suitable for printing and displaying. In this process, the block pixel count data file is decompressed subsequently by selecting, for each block pixel count, a block pixel pattern from a plurality of predetermined block patterns each having the same or substantially the same number of black pixels as in the original block from which such count was made. In other words, a dithered bilevel image file is first compressed by analyzing blocks of pixels and counting the number of pixels that are turned on and represent a monochrome color (e.g., black). A compressed file is created containing block pixel counts for all blocks in the bilevel image file. Subsequently, the block pixel count file is decompressed by using the block pixel counts for all of the blocks to randomly select block pixel patterns from a plurality of pixel pattern sets. Each pattern set includes a plurality of different block pixel patterns that present a range of different grey tone levels ranging from completely black to completely white.

Viewed from another aspect, the invention provides a data processing apparatus comprising: a memory; a dithered bilevel image file stored in said memory, said file containing a plurality of bits respectively corresponding to pixels of an image, each bit having two states with one state indicating that the corresponding pixel has a monochrome value and the other state indicating the corresponding pixel lacks such monochrome value; first processing means for converting said dithered bilevel image file into a pixel count file having a plurality of binary numbers, each binary number indicating how many bits in a block of adjacent pixels are in said one state; a plurality of pattern sets stored in said memory, each pattern set comprising a plurality of block pixel bit patterns that differ within a pattern set and between pattern sets; and second processing means for converting said pixel count file into a bit mapped image file by randomly selecting, for each one of said binary numbers, a block pixel bit pattern from one of said pattern sets and storing such selected block pixel bit patterns in said bit mapped image file.

In a preferred embodiment, said bits in said dithered bilevel image file represent a plurality of rows of pixels forming said image; and said first processing means analyzes said bits in said dithered bilevel image file as a plurality of rows of blocks of adjacent pixels, each pixel being in only one block, and each block being of a predetermined block size. Said predetermined block size is four rows of four pixels; and each of said binary numbers has four bits. Each block pixel bit pattern specifies a grey tone level substantially the same as that perceivable in a corresponding block of dithered bilevel image bits (eg black bits).

Typically the apparatus further includes printing means for printing said bit mapped image file and causing ink to be deposited on paper for each pixel bit set to the one state in the bit mapped image file and/or display means for displaying said bit mapped image file and causing display pixels to be set to foreground and background colors for pixel bits set to the one state and the other state respectively in the bit mapped image file.

Viewed from yet another aspect, the invention provides data processing apparatus comprising: a memory; a dithered bilevel image file stored in said memory, said file containing a plurality of bits respectively corresponding to pixels of an original image, each bit having two states with one state indicating that the corresponding pixel is black and the other state indicating the corresponding pixel is white, said bits in said dithered bilevel image file representing a plurality of rows of pixels forming said original image; first processing means for converting said dithered bilevel image file into a pixel count file having a plurality of binary numbers, said first processing means being operative to analyze said bits in said dithered bilevel image file as a plurality of rows of blocks of adjacent pixels, each pixel being in only one block, and each block containing sixteen pixels arranged in four rows of four pixels, each binary number consisting of four bits indicating how many bits in a block of adjacent pixels are black; a plurality of pattern sets stored in said memory, each pattern set comprising a plurality of block pixel bit patterns that differ within a pattern set and between pattern sets, each block pixel bit pattern having a size the same as said predetermined block size, each block pixel bit pattern specifying a grey tone level substantially the same as that perceivable in a block having the same number of black pixels; second processing means for converting said pixel count file into a bit mapped image file by randomly selecting, for each one of said binary numbers, a block pixel bit pattern from one of said pattern sets and storing such selected block pixel bit patterns in said bit mapped image file; and an output device for reproducing an output image from said bit mapped image file wherein pixels of said output image have colors corresponding to the states of the bits in said bit mapped image file.

Viewed from yet another aspect, the invention provides a method of operating a data processing system to process a dithered bilevel image file, comprising the steps of: (a) storing the dithered bilevel image file in said data processing system, said file having a plurality of bits indicating black and white states of pixels in an image; (b) storing a plurality of sets of block pixel bit patterns, each set comprising a plurality of block pixel bit patterns having different grey tone levels defined by the numbers and positions of black pixels within the respective block pixel bit patterns; (c) counting the numbers of black pixels in said dithered bilevel image file in blocks of adjacent pixels in the original image and storing such numbers in a block pixel count file; (d) randomly selecting block pixel bit patterns from said sets in accordance with said numbers in said block pixel count file, said selected block pixel bit patterns having the same or substantially the same numbers of black pixels defined by the numbers in said block pixel count file; and (e) creating a bit mapped image file from said selected block pixel bit patterns.

Preferably said grey tone levels in said block pixel bit patterns stored in step (b) range from solid white through intermediate grey levels to solid black and each block pixel bit pattern in a set has a different number of black pixels thereby defining a different grey tone level. It is also preferred that the number of sets is at least three to avoid the appearance of any unwanted artifacts.

An embodiment of the invention will now be described by way of example only with reference to the following drawings:
Fig. 1 is a block diagram of a data processing system;
Fig. 2 is a flow chart for compressing image data during operation of the system shown in Fig. 1;
Fig. 3 is a flow chart illustrating details of the image compression operations of Fig. 2;
Fig. 4 is a flow chart similar to Fig. 2, for post-compression processing operations;
Fig. 5. is a diagram of exemplary pattern sets used in the operations illustrated in Fig. 6; and
Fig. 6 is a flow chart similar to Fig. 3 illustrating details of the image decompression operations of Fig. 4.

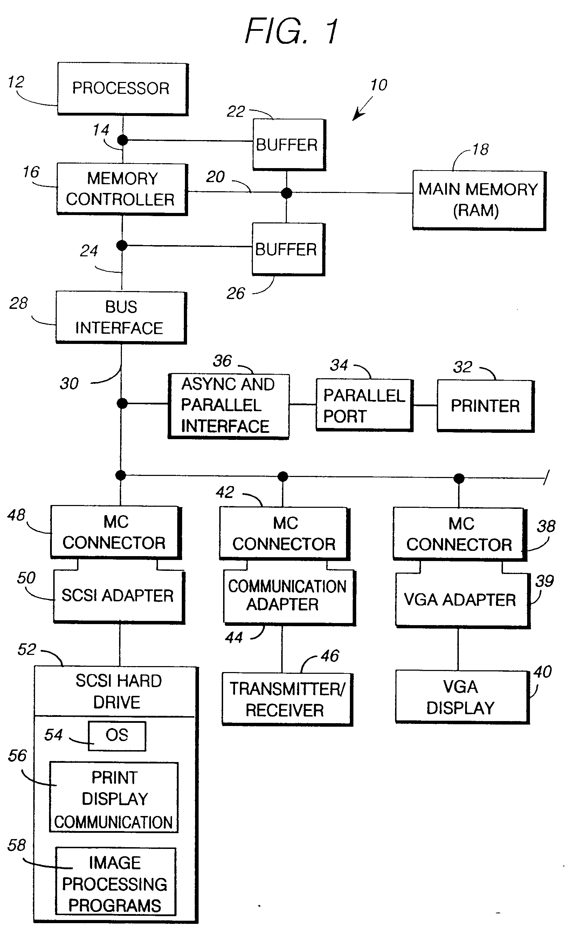

Referring now to the drawings, and first to Fig. 1, a data processing system 10 executes application programs under the control of an operating system. System 10 illustrates commercially available hardware plus a standard operating system, which is well-known, and so will only be described briefly.

System 10 comprises a personal computer such as a commercially available IBM Model 95 personal computer, which includes a processor 12 connected by a CPU bus 14 to a memory controller 16. A main memory 18 implemented as a random access memory (RAM), stores programs and data for execution by processor 12. Main memory 18 is connected by memory bus 20 to memory controller 16 and to a data buffer 22 through which data flows between processor 12 and main memory 18. Memory controller is a dual port device having one port connected to bus 14 and the other port connected by a system bus 26 to a bus interface unit (BIU) 28 that interfaces between bus 24 and an IBM MicroChannel (MC) or expansion bus 30. Data flows between main memory 18 and bus interface 28 and bus 30 through a buffer 26.

A printer 32 is connected to bus 30 through a parallel port 34 and an asynchronous and parallel interface 36. A plurality of MC connectors are also connected to bus 30 and provide the means by which adapters and other devices are connected into the system. Such connectors include a connector 38 having a video graphics array (VGA) adapter 39 connected thereto for coupling a VGA display 40. Another connector 42 is connected to a communication adapter 44 by means of which a data transmitter/receiver 46, such as a modem, is coupled to the system. Still another connector 48 is connected to a small computer system interface (SCSI) adapter 50 which is connected to a SCSI hard drive 52 that stores files or data including an operating system (OS) 54, and a plurality of standard application programs 56 including print, display, and communication programs for operating printer 32, display 40, and transmitter/receiver 46. Main memory 18 provides volatile storage while drive 52 provides non-volatile storage. Main memory 18 and drive 52 form part of a memory system in which programs and data are stored, accessed, and moved under program control in a conventional manner.

The system as thus far described is well known, and many support and other devices commonly included in a data processing system have been omitted for simplicity of illustration. The method of present invention is implemented by the image processing programs 58, the data structures produced and used by such programs, and the various processes and functions performed by the system when such programs are executed.

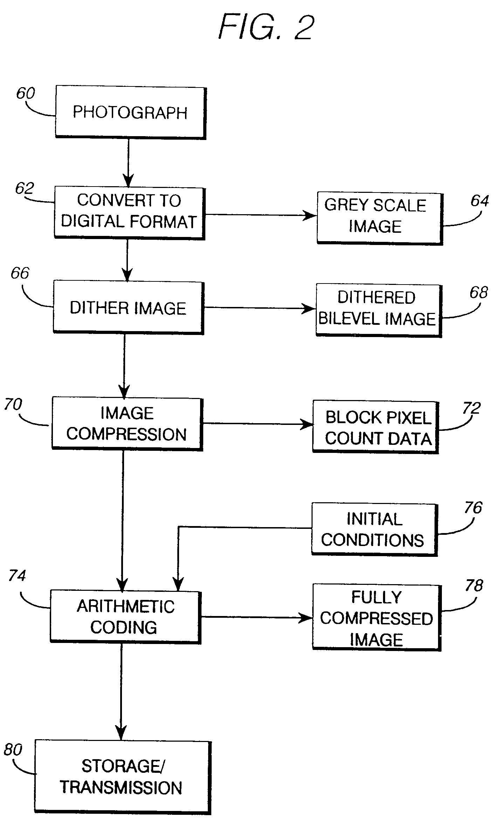

The compression of a dithered bilevel image file will now be discussed, relative to printing or displaying an image derived from an ordinary black-and-white photograph. Fig. 2 illustrates a conventional example of how such a file can be created. A photograph 60 is scanned in process 62 with the photographic image being examined line-by-line and each line being broken down into pixels (picture elements). The scan resolution between lines is the same as the scan resolution between pixels in a line. The grey tone of each pixel is determined and is converted into a digital value representing the grey tone of the pixel. The digital values for the grey tones of all of the pixels are stored in a grey scale image file 65. Next, a dithering process 66 is performed which converts the grey tone image into a bit mapped image having a pattern of black dots for use as a foreground color on a white background. Such pattern is defined as a dithered bilevel image file 68 that is produced by and forms the output from dither process 66.

Dithered bilevel image file 68 includes a header and a bit mapped image. The header lists the number of rows representing the image and the number of pixels per row. The bit mapped image contains one pixel bit for each pixel with each bit having two states. One state indicates a pixel has a monochrome color and the other state indicates the pixel lacks such color. Such meaning as applied to a printing process using black ink indicates that a black dot should be printed when the pixel is in the one state and that no dot should be printed when the pixel is in the other state thereby allowing the white background color of the paper to be visible. Thus, the two states represent black and white "dots". The two states obviously can also represent a two color printing system, or foreground and background colors used to display the image on a monitor.

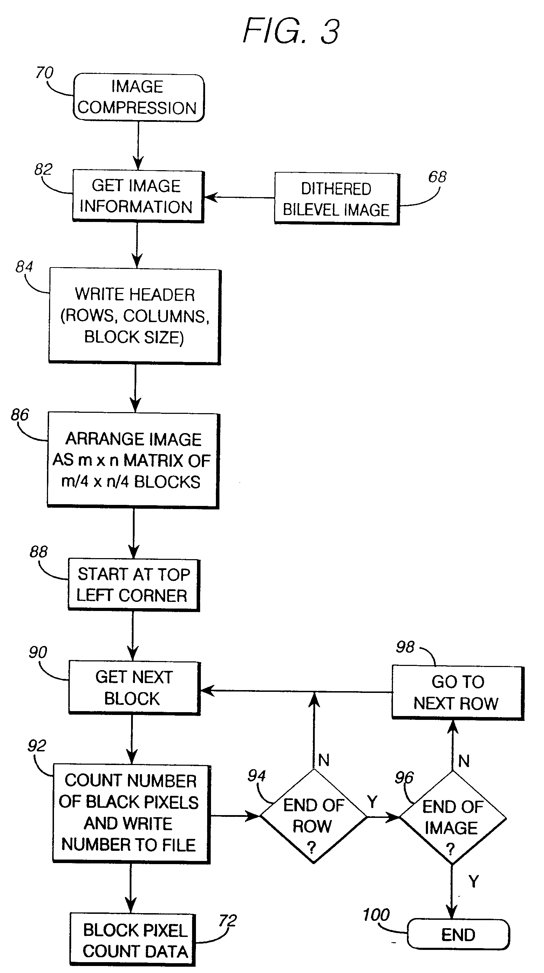

An image compression routine 70, which is one of image processing programs 58 (Fig. 1), uses dithered bilevel image file 68 as an input and produces a compressed file 72 of block pixel count data by a process described in detail below with reference to Fig. 3.

In a preferred embodiment, file 72 is then compressed further by a conventional compression program 74 which uses a set or file of standard initial conditions 76. The general function of the arithmetic coding program 74 is to replace repetitive bit sequences or patterns in the input file with a lesser number of bits indicating the pattern and number of repetitions. For example, suppose an image contains relatively large black areas or areas of the same grey tone, such that the block pixel count data involves many sequences having several identical block pixel counts. If a sequence contains twenty-five identical bit pixel counts defined by 100-bits, the sequence can be reduced or compressed to a single four bit count identifying the black pattern, and to a binary number (nine bits) indicating a repetition of twenty five (this is a standard compression technique termed run-length encoding). In any event, the output of arithmetic coding program 74 is a fully compressed, smaller file 78 that results from the double compression accomplished by processes 70 and 74. A suitable arithmetic coding program is marketed by IBM Corporation as part of the ImagePlus document processing platform, which also sets appropriate initial conditions.

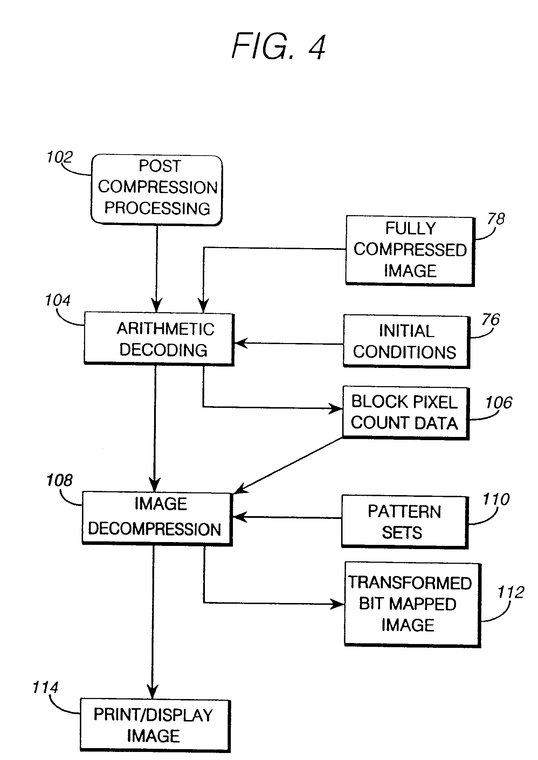

File 78 can then be stored and/or transmitted to another system in step 80 for post compression processing as described below relative to Fig. 4.

With reference to Fig. 3, prior to the start of image compression processing 70, dithered bilevel image file 68 is stored in either main memory 18 for processing or in hard drive 52. When stored in drive 52, the image file is read into the main memory for analysis and processing. Step 82 accesses dithered bilevel image file 68 and reads the image information including the header and the bit mapped image. The header provides the number "m" of rows of pixels and the number "n" of pixels per row while the bit mapped image includes one bit per pixel. Step 84 next writes a header to the file 72 being created, such header defining a block size in accordance with which the image is analyzed or examined. The header also specifies the number "m/x" of rows and the number "n/x" of columns of such blocks, where "x" is an integer. In the illustrated embodiment, "x=4" and represents a "4x4" square or block of adjacent pixels in the bit mapped image. Each pixel is in only one block. Step 86 then arranges the pixels into a matrix of blocks. The examination begins at 88 with the upper left hand corner of the matrix. The first block is accessed at 90 and step 92 counts the number of pixels in the block which is/are set to a "1" to represent a black or other monochrome printing ink or display color. Since the number of pixels in the block is sixteen, the number of pixels in the block can be specified as a 4-bit binary number. Such size is also known as a nibble and is one-half of an 8-bit byte and one-quarter of a 16-bit word. The black pixel count number nibble is assembled into a word and each assembled word is written into file 72.

(Note that in fact the there are actually seventeen possible numbers of black pixels - from nought to sixteen inclusive, which is actually one more than can be stored in a 4-bit number. To overcome this problem, fourteen and fifteen are both recorded as fourteen, whilst sixteen black pixels is recorded as fifteen.)

Step 94 decides if the end of a row of blocks has been reached. If not, a branch is made back to step 90 to access the next block and repeat step 92. When the end of the row is reached, step 96 determines if all of the blocks have been processed, i.e., has the end-of-image been reached. If not, a branch is made back to step 90 to begin examining the next row of blocks. The process ends at 100 when all blocks have been processed at which time file 72 is considered completed and contains data representing the block pixel count, i.e., the number of black pixels in each block. The original dithered bilevel image file has thus been converted into a block pixel count data file having a size compressed by a factor of four-to-one during image compression 70. Each sixteen-bit pixel block is converted into a four-bit block pixel count number. The compressed file can then be stored as such, and/or transmitted, and/or further compressed by step 74.

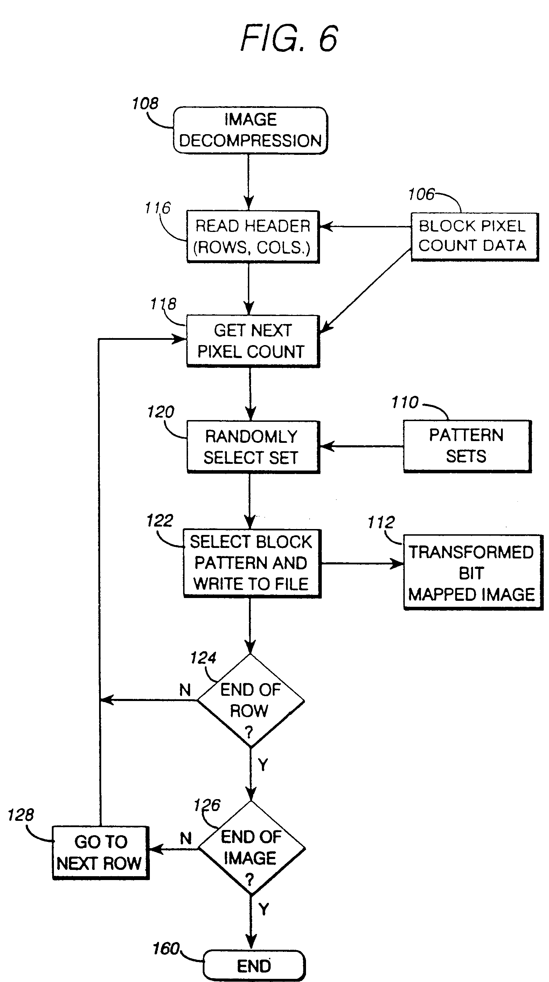

Once the image file has been converted and compressed, it needs to be decompressed before printing or displaying the image. With reference to Fig. 4, during post compression processing 102, the fully compressed image 78 is first decompressed by arithmetic decoding in step 104 using the same initial conditions 76 as were used in the arithmetic coding step 74 (Fig. 2). This decompression creates a file 106 of block pixel count data that is the same as file 72. Next, step 108 performs an image decompression on file 106, which is explained in more detail below relative to Fig. 6. Step 108 uses pattern sets 110 to assign a predetermined pixel pattern randomly selected from a plurality of patterns, to each block where the selected pattern produces a predetermined grey tone level. Step 112 produces a transformed bit mapped image 112 containing a plurality of pixels represented by one-bit per pixel. The bit mapped image file 112 can then be printed or displayed in step 114 by programs 56 (Fig. 1) where each black pixel is printed by ink on paper or displayed as a foreground color on a display, and the non-black pixels are represented by the white of the paper or the background color of the display.

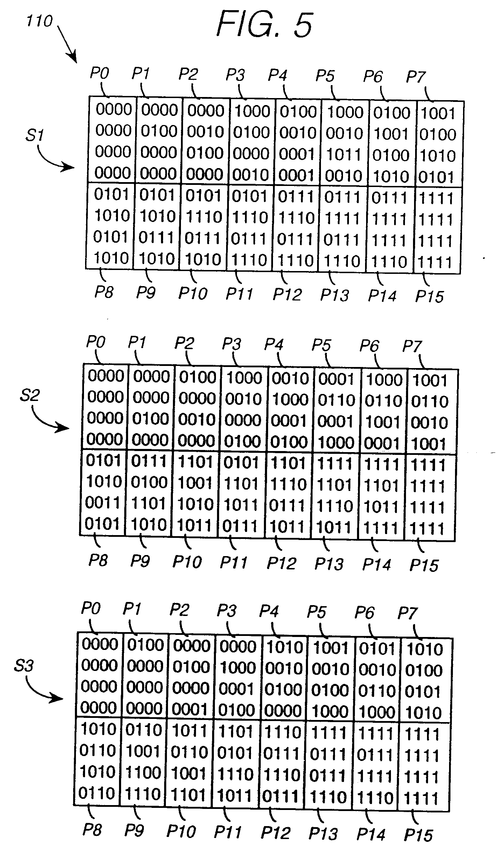

Before describing details of the pattern sets shown in Fig. 5, the theory thereof is now explained. Each dithered bit mapped image being processed is divided into "4x4" blocks of adjacent pixels with each pixel being in only one block. To the human eye, each block has a greying effect proportional to the number of black pixels in the block and the positions or pattern of those pixels. For a block of sixteen pixels, sixty-four thousand different combinations or patterns are possible, but far less grey scale combinations are perceivable. It is believed the average human can perceive no more than 256 different grey tones or levels of grey. However, an acceptable picture can be reproduced with only sixteen grey levels with each grey level being represented by a four bit binary number. These grey levels can be mapped from the sixty-four thousand combinations by using the number of black pixels in a block as a grey level indicator.

Referring to Fig. 5, pattern sets 110 comprises three sets S1, S2, and S3 of block pixel patterns P0-P15. Each set defines sixteen different grey levels, the darkest level being one where all the pixels are black and the lightest levels being one where none of the pixels is black (all "white"). The use of only one set with sixteen grey levels produces a picture in which undesirable strings of artifacts are readily visible. To avoid such results, the picture is created from the block pixel count data by randomly selecting a block pattern from a group of block patterns that all have the same grey scaling effect. The choice of random patterns eliminates the offending visual results produced by the use of only one se. The number of pattern sets is preferably in the range from three-to-eight with three being the minimum number that avoids offending results and eight being the maximum number beyond which little additional improvement is perceivable.

Each block pattern P contains sixteen bits representing a predetermined pixel pattern in a block. The pattern is defined by binary 1's and 0's where a "1" represents a black pixel and a "0" represents a white or non-black pixel. Groups of patterns P0 are all white and groups of patterns P15 are all black. Patterns P1-P14 have different predetermined, random pixel patterns that differ from each other within a set and between groups in the sets. Within a set, patterns P1-P14 differ by the number of pixels that are set to black. Between groups, patterns having the same number of black pixels differ by the positions of the pixels with the pattern.

Once a particular set has been randomly selected, the block pixel count number is used to select a particular pattern that has the same or nearly the same number of black pixels. For example, a block pixel count of four (binary "0100") selects a pattern P4 having four black pixels. The group of block patterns P4 in the different sets each have the same number of black pixels that are differently positioned. Block pixel counts of 0-14, and 16 select block patterns having the same number of black pixels as in the pixel count. In the case of a block having fifteen black pixels, however, a pixel count of fifteen selects a pattern P14 having only fourteen black pixels. The reason for such selection is that four bits can be used for no more than sixteen different conditions while each block can be set to seventeen different conditions corresponding to one in which no pixel is black and sixteen conditions in which a range of one-to-sixteen pixels are black. A block of fourteen black pixels provides substantially the same grey tone level as one of fifteen black pixels.

As shown in Fig. 6, image decompression process 108 comprises step 116 reading the row and column information from the header of block pixel count data file 106. The nibbles representing the block pixel count numbers are then processed one-at-a-time in the following manner. Step 118 gets a block pixel count and step 120 randomly selects one of sets S1-S3 from which to make a block pattern selection for that count. Step 122 then selects the block pixel pattern from the selected set using the pixel count as an index into the selected set, and writes the selected pattern to file 112. Steps 124, 126 and 128 controls the sequential processing of the pixels counts and when the entire pixel count data has been processed, transformed bit mapped image 112 has been created and process 108 ends at 160. File 112 may also contain a header that is created from the row and column information from the header of block pixel count data file 106. The header may be in any format recognized by the intended user of the decompressed image. File 112 has the same number of pixel bits as file 64 but the bit patters of the pixels differ because of the random use of the arbitrary block patterns. Since a random method was used to select which block patterns are used during decompression, the reconstructed image is superior to a method that will create repetitive patterns or artifacts. The compression level is comparable to other methods that perform lossy filtering or resolution reduction prior to using methods such as JBIG. However, the quality of the compressed image is superior to such methods because of better retention of the grey values in each pixel block, or less total image loss. Further, the method of the invention is superior in computation speed over other implementations such as JBIG because only a single value needs to be entropy coded for each pattern block versus each pixel being coded relative to its eight neighboring pixels. When "4x4" pixels blocks are used, at most one sixteenth the values are processed.

It may be desirous in some applications to eliminate the arithmetic coding steps 74 and 104 and process only the block pixel count data 72 and 106 without further compression and subsequent decompression.

As will be appreciated by those skilled in the art, the programs and data are stored as electrical signals, which are processed not only by the memories and storage devices which store the signals but also by the different components, including the microprocessor, which transmit and operate in response to such signals, and perform the different processing functions and operations described above. Further, although the method as described above has been implemented under software control, it would also be possible to develop a system having specially designed hardware to implement such a method.

## Claims

1. A method of processing a dithered bilevel image (68) to produce a compressed image, said dithered bilevel image comprising a plurality of pixels, each pixel having one bit to indicate whether the pixel has a first or second state, said method comprising the steps of:
selecting (90) blocks of adjacent pixels;
counting (92), for each block, the number of pixels in the block having the first state; and
forming the compressed image (72) by representing each block by its counted number of pixels.

2. A method of image processing as claimed in claim 1, in which each block of adjacent pixels contains the same number of pixels.

3. A method of image processing as claimed in claim 2, in which each block of adjacent pixels comprises sixteen pixels in a four by four arrangement, and said counted number comprises a four bit binary number.

4. A method as claimed in any preceding claim, in which each pixel is in only one selected block.

5. A method as claimed in any preceding claim, further comprising the step of performing an additional compression process (74) on said compressed image, to produce a further compressed image (78).

6. A method of processing an image (106) compressed according to the method of any preceding claim to form a decompressed image (112), said method comprising the steps of:
storing at least one pattern set (110), each pattern set comprising a plurality of different block pixel bit patterns; and
forming (108) the decompressed image by representing each counted number in the compressed image by a corresponding block pixel bit pattern.

7. A method as claimed in claim 6, where each block pixel bit pattern has the same size as the blocks of selected pixels.

8. A method as claimed in claim 7, in which the block pixel bit pattern corresponding to a counted number contains a number of pixels in said first state approximately equal to said counted number.

9. A method as claimed in any of claims 6 to 8, in which the distribution of pixels in said first state in each block pixel bit pattern is such as to be perceived as substantially uniform.

10. A method as claimed in any of claims 6 to 9, in which there are a plurality of pattern sets (110), with the block pixel bit pattern corresponding to any given counted number in the compressed image being selected at random from between said plurality of pattern sets.

11. A method as claimed in any of claims 6 to 10, in which a further compressed image (78) undergoes an initial decompression process (104) which is the inverse to said additional compression process.

12. Apparatus for processing a dithered bilevel image (68) to produce a compressed image (72), said dithered bilevel image comprising a plurality of pixels, each pixel having one bit to indicate whether the pixel has a first or second state, said apparatus comprising:
means for selecting blocks of adjacent pixels;
means for counting, for each block, the number of pixels in the block having the first state; and
means for forming the compressed image by representing each block by its counted number of pixels.

13. Apparatus for image compression as claimed in claim 12, in which each block of adjacent pixels contains the same number of pixels and each pixel is in only one selected block.

14. Apparatus for image compression as claimed in claim 12 or 13, further comprising means for performing an additional compression process (74) on said compressed image, to produce a further compressed image (78).

15. Apparatus for processing an image (106) compressed according to the method of any claims 1 to 5 to form a decompressed image (112), said apparatus comprising:
means for storing at least one pattern set (110), each pattern set comprising a plurality of different block pixel bit patterns; and
means for forming the decompressed image by representing each counted number in the compressed image by a corresponding block pixel bit pattern.

16. Apparatus for image decompression as claimed in claim 15, in which each block pixel bit pattern has the same size as the blocks of selected pixels, and a block pixel bit pattern corresponding to a counted number contains a number of pixels in said first state approximately equal to said counted number, and in which the distribution of pixels in said first state in each block pixel bit pattern is such as to be perceived as substantially uniform.

17. Apparatus for image decompression as claimed in claim 15 or 16, in which there are a plurality of pattern sets, with the block pixel bit pattern corresponding to any given counted number in the compressed image being selected at random from between said plurality of pattern sets.

18. Apparatus for image decompression as claimed in claim 17, in which there are at least three pattern sets.

19. Apparatus for image decompression as claimed in any of claims 15 to 18, further comprising means for performing an initial decompression process (104) on a further compressed image (78), said initial decompression process being the inverse to said additional compression process.

20. Apparatus for image decompression as claimed in any of claims 15 to 19, further comprising means (32, 40) for printing or displaying a monochromatic image, in which a foreground colour is assigned to one of said first and second pixel states, and a background colour is assigned to the other of said first and second pixel states.

21. Image processing apparatus including the image compression apparatus of any of claims 12 to 14, and the image decompression apparatus of any of claims 15 to 20.
